# EUROPEAN PATENT APPLICATION

(11) **EP 4 800 973 A1**
(43) Date of publication of application: **02.09.2026**
(21) Application number: 24883915.1
(22) Date of filing: 04.06.2024
(51) Int. Cl.: H04L 9/32, H04W 12/106

(54) **DATA TRANSMISSION METHODS AND APPARATUSES**

(30) Priority: 03.11.2023 CN 202311465370
(71) Applicant: ZTE CORPORATION, Shenzhen, Guangdong 518057 (CN)
(72) Inventor: XIE, Feng, Shenzhen, Guangdong 518057 (CN); LIU, Yu, Shenzhen, Guangdong 518057 (CN); HUANG, Fenghe, Shenzhen, Guangdong 518057 (CN)
(74) Representative: Pennacchio, Salvatore Giovanni
(86) International application number: PCT/CN2024/097358
(87) International publication number: WO 2025/091904

(57) **Abstract**

Provided are a data transmission method and device, applied to a sending end. The method includes: segmenting a data block to be sent in sequence; performing first deterministic processing on a data segment obtained after each segmentation processing to obtain a target data segment; and sending the target data segment to a receiving end.

## Description

### Cross-Reference to Related Application

The present disclosure is based on and claims the benefit of priority of Chinese Patent Application No. 202311465370.8, filed on November 03, 2023, the disclosure of which is incorporated herein by reference in its entirety.

### Technical Field

Embodiments of the present disclosure relate to the field of communications, and in particular, to a data transmission method and device.

### Background

In existing wireless communication systems, most of the transmitted application layer data are IP packets, and the length of an IP packet is usually 1500 bytes (standard Ethernet frame) or 9000 bytes (Jumbo frame). In future wireless communication systems (e.g., 6G), due to the support of new services such as AI and sensing, the data transmitted in the system may no longer be IP-based packets, and may need to transmit a large file, such as AI data. These data may not come from the application layer, but may be data generated inside the system. The main difference between this type of large file data transmission and IP packet transmission lies in that: for an IP packet, the network only needs to ensure the determinism of the IP packet; whereas for large data transmission such as a large file, the network needs to ensure the deterministic transmission of the entire file.

However, existing wireless communication systems do not have a deterministic guarantee strategy for such large data transmission.

### Summary

Embodiments of the present disclosure provide a data transmission method and device, so as to at least solve the problem in the related art that there is no deterministic guarantee strategy for large data transmission.

According to an embodiment of the present disclosure, a data transmission method is provided, applied to a sending end, including:
segmenting a data block to be sent in sequence;
performing first deterministic processing on a data segment obtained after each segmentation processing to obtain a target data segment; and
sending the target data segment to a receiving end.

According to another embodiment of the present disclosure, a data transmission method is provided, applied to a receiving end, including:
receiving a target data segment; wherein the target data segment is a data segment obtained by a sending end segmenting a data block to be sent in sequence and performing first deterministic processing on a data segment obtained after each segmentation processing;
performing second deterministic processing on each received target data segment; and
combining, in sequence, the target data segments on which the second deterministic processing is performed to obtain a target data block.

According to another embodiment of the present disclosure, a data transmission device is provided, applied to a sending end, including:
a segmenting module, configured to segment a data block to be sent in sequence;
a first deterministic processing module, configured to perform first deterministic processing on a data segment obtained after each segmentation processing to obtain a target data segment; and
a sending module, configured to send the target data segment to a receiving end.

According to another embodiment of the present disclosure, a data transmission device is provided, applied to a receiving end, including:
a receiving module, configured to receive a target data segment; wherein the target data segment is a data segment obtained by a sending end segmenting a data block to be sent in sequence and performing first deterministic processing on a data segment obtained after each segmentation processing;
a second deterministic processing module, configured to perform second deterministic processing on each received target data segment; and
a combining module, configured to combine, in sequence, the target data segments on which deterministic verification is performed to obtain a target data block.

According to another embodiment of the present disclosure, a computer-readable storage medium is further provided, wherein the computer-readable storage medium stores a computer program, and the computer program is configured to, when being run, implement steps in any one of the above method embodiments.

According to another embodiment of the present disclosure, an electronic device is further provided, including a memory and a processor, wherein the memory stores a computer program, and the processor is configured to run the computer program to execute steps in any one of the above method embodiments.

### Brief Description of the Drawings

Fig. 1 is a hardware structure block diagram of a mobile terminal for a data transmission method according to an embodiment of the present disclosure.
FIG. 2 is a flowchart of a data transmission method according to an embodiment of the present disclosure.
FIG. 3 is a flowchart of a data transmission method according to another embodiment of the present disclosure.
FIG. 4 is a schematic flowchart of data integrity protection according to an embodiment of the present disclosure.
FIG. 5 is a schematic flowchart of data integrity verification at a receiving end according to an embodiment of the present disclosure.
FIG. 6 is a schematic flowchart of data encryption according to an embodiment of the present disclosure.
FIG. 7 is a schematic flowchart of data decryption at a receiving end according to an embodiment of the present disclosure.
FIG. 8 is a structural block diagram of a data transmission device according to an embodiment of the present disclosure.
FIG. 9 is a structural block diagram of a data transmission device according to another embodiment of the present disclosure.

### Detailed Description of the Embodiments

Hereinafter, embodiments of the present disclosure will be described in detail with reference to the drawings and in conjunction with the embodiments.

It should be noted that the terms "first", "second", etc. in the description, claims, and the above drawings of the present disclosure are used to distinguish similar objects, and are not necessarily used to describe a specific order or sequence.

In existing wireless communication systems, the network does not need to consider deterministic transmission of large data (e.g., a large file), because the large file has already been fragmented at the application layer, and the network only needs to ensure deterministic transmission of a certain data packet. However, for large data generated inside the system (such as AI data, sensing data, computing power data, etc.), there is no corresponding deterministic transmission method in existing wireless communication systems, and the reliability of large data transmission cannot be ensured.

Based on the above problems existing in the prior art, embodiments of the present disclosure provide a data transmission method. The technical concept thereof lies in: a receiving end segments a data block to be sent in sequence, performs first deterministic processing on a data segment obtained after each segmentation processing to obtain a target data segment, and then sends the target data segment to a receiving end; the receiving end performs second deterministic processing on each received target data segment, and then combines, in sequence, the target data segments on which the second deterministic processing is performed to obtain a target data block. Thus, the problem in the related art that there is no deterministic guarantee strategy for large data transmission is solved, thereby ensuring both the determinism of data segment transmission and the determinism of entire data block transmission. Moreover, errors during the data segmentation process can be discovered in time and remedial measures can be provided.

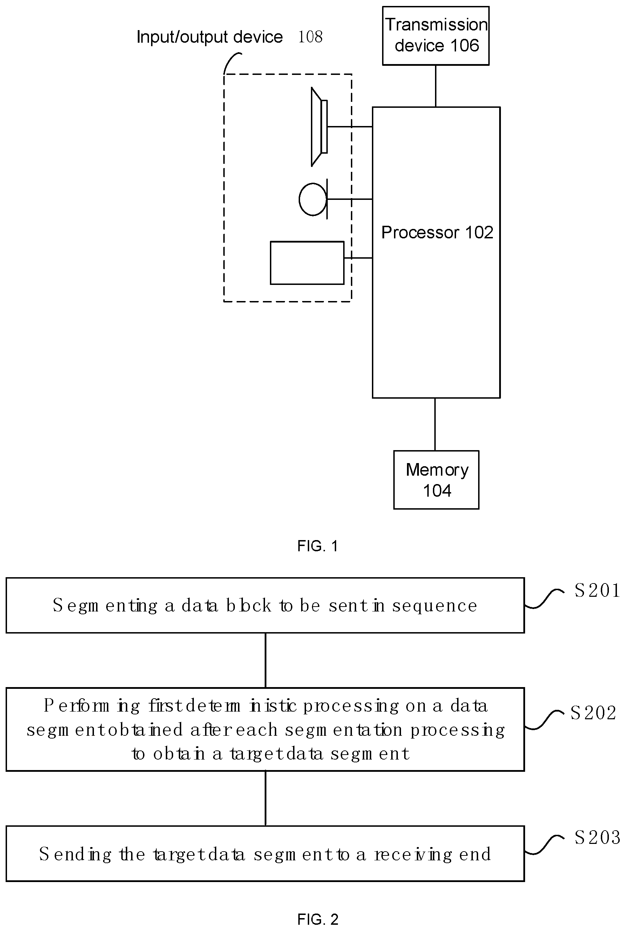

The method embodiments provided in the embodiments of the present disclosure can be executed in a mobile terminal, a computer terminal, or a similar computing device. Taking the execution on a mobile terminal as an example, FIG. 1 is a hardware structure block diagram of a mobile terminal for a data transmission method according to an embodiment of the present disclosure. As shown in FIG. 1, the mobile terminal may include one or more (only one is shown in FIG. 1) processors 102 (the processors 102 may include, but are not limited to, processing devices such as a microprocessor (MCU) or a programmable logic device (FPGA)) and a memory 104 for storing data, wherein the mobile terminal may further include a transmission device 106 and an input/output device 108 for communication functions. Those of ordinary skill in the art can understand that the structure shown in FIG. 1 is merely illustrative and does not limit the structure of the mobile terminal. For example, the mobile terminal may also include more or fewer components than those shown in FIG. 1, or have a different configuration from that shown in FIG. 1.

The memory 104 may be used to store a computer program, for example, a software program and a module of application software, such as a computer program corresponding to a data transmission method in an embodiment of the present disclosure. The processor 102 executes various functional applications and data processing, i.e., implements the above method, by running the computer program stored in the memory 104. The memory 104 may include a high-speed random access memory, and may also include a non-volatile memory, such as one or more magnetic storage devices, a flash memory, or other non-volatile solid-state memories. In some examples, the memory 104 may further include a memory remotely located relative to the processor 102, and these remote memories may be connected to the mobile terminal via a network. Examples of the above network include, but are not limited to, the Internet, intranets, local area networks, mobile communication networks, and combinations thereof.

The transmission device 106 is used to receive or send data via a network. Specific examples of the above network may include a wireless network provided by a communication provider of the mobile terminal. In one example, the transmission device 106 includes a network adapter (Network Interface Controller, NIC for short), which can be connected to other network devices via a base station to communicate with the Internet. In one example, the transmission device 106 may be a Radio Frequency (RF for short) module, which is used to communicate with the Internet wirelessly.

The data transmission method of the embodiments of the present disclosure is applicable to, but not limited to, transmission of new types of data (such as AI data, sensing data, computing power data, etc.), data transmission between any two nodes in a wireless communication network, etc., wherein these nodes include, but are not limited to, a terminal, a base station, a core network element, and other network elements for processing data.

In the present embodiment, a data transmission method is provided. FIG. 2 is a flowchart of a data transmission method according to an embodiment of the present disclosure, applied to a sending end. As shown in FIG. 2, the process includes the following steps:
Step S201: segmenting a data block to be sent in sequence.

In the present embodiment of the present disclosure, during transmission of a large data block, due to limited transmission resources (e.g., air interface resources), segmented transmission may be adopted. Exemplarily, the sending end may segment the data block to be sent in sequence according to a segmentation mechanism.

Step S202: performing first deterministic processing on a data segment obtained after each segmentation processing to obtain a target data segment.

Step S203: sending the target data segment to a receiving end.

Exemplarily, the sending end may perform first deterministic processing on a data segment obtained after each segmentation processing to obtain a target data segment, and may send the target data segment to a receiving end, so that the receiving end performs corresponding processing on the target data segment.

In an exemplary embodiment, the first deterministic processing includes at least one of the following: integrity protection or encryption.

As an example, the first deterministic processing may include, but is not limited to, integrity protection or encryption. For example, the first deterministic processing may be integrity protection, or may be encryption, or may be integrity protection followed by encryption, or encryption followed by integrity protection, which is not limited in the embodiments of the present disclosure.

In the embodiments of the present disclosure, the sending end may first segment the large data block and then perform integrity protection or encryption on the obtained data segments, which can avoid the problem caused by performing integrity protection or encryption only on the entire large data block in the related art: during transmission, when an integrity verification or decryption error occurs in a certain data segment, it cannot be discovered in time.

For example, if the first deterministic processing is integrity protection, the sending end may perform integrity protection (e.g., using a Message Authentication Codes-Integrity (MAC-I) mechanism, etc.) on a first data segment obtained by performing first segmentation processing on the data block to obtain a first integrity-protected data segment, send the first integrity-protected data segment to the receiving end, then perform second segmentation processing on the data block, and repeat the above process until all integrity-protected data segments of the data block are sent to the receiving end.

For example, if the first deterministic processing is encryption, the sending end may encrypt a first data segment obtained by performing first segmentation processing on the data block to obtain a first encrypted data segment, send the first encrypted data segment to the receiving end, then perform second segmentation processing on the data block, and repeat the above process until all encrypted data segments of the data block are sent to the receiving end.

In an exemplary embodiment, the sending the target data segment to a receiving end includes: obtaining a hash value of the data block to be sent; and sending the hash value of the data block to be sent and the target data segment to the receiving end.

As an example, the sending end may calculate the hash value of the data block to be sent before segmenting the data block to be sent.

As an example, the sending end may send the hash value of the data block and any target data segment of the data block together to the receiving end, so that after completing corresponding deterministic processing on each target data segment, the receiving end performs hash value verification on the entire data block.

In an exemplary embodiment, the sending the hash value of the data block to be sent and the target data segment to the receiving end includes: in response to the target data segment being a first target data segment or a last target data segment of the data block to be sent, sending the hash value of the data block to be sent and the target data segment to the receiving end.

As an example, the sending end may send the hash value of the data block and the first target data segment or the last target data segment of the data block together to the receiving end, so that the receiving end can better identify the data block.

In the embodiments of the present disclosure, the sending end segments the data block to be sent in sequence, performs first deterministic processing on the data segment obtained after each segmentation processing to obtain the target data segment, and sends the target data segment to the receiving end, thereby ensuring not only the determinism of data segment transmission, but also the determinism of entire data block transmission, and moreover, errors during the data segmentation process can be discovered in time and remedial measures can be provided.

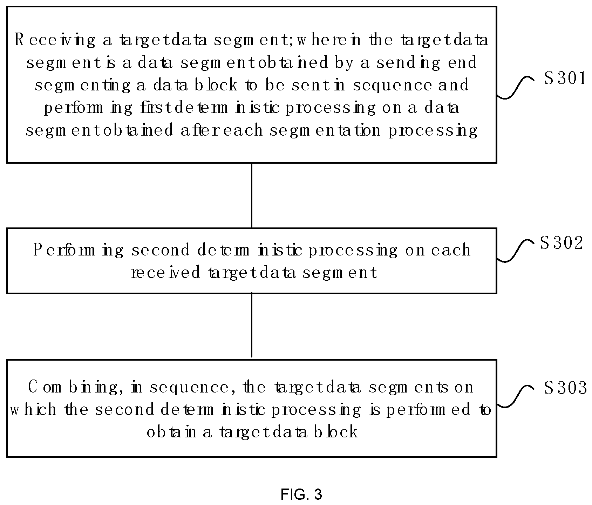

In the present embodiment, a data transmission method is provided. FIG. 3 is a flowchart of a data transmission method according to another embodiment of the present disclosure, applied to a receiving end. As shown in FIG. 3, the process includes the following steps:
Step 301: receiving a target data segment; wherein the target data segment is a data segment obtained by a sending end segmenting a data block to be sent in sequence and performing first deterministic processing on a data segment obtained after each segmentation processing.

In the embodiments of the present disclosure, the receiving end may sequentially receive the target data segments sent by the sending end. The target data segment may be a data segment obtained by a sending end segmenting a data block to be sent in sequence and performing first deterministic processing on a data segment obtained after each segmentation processing.

As an example, the sending end may perform first deterministic processing on a first data segment obtained by performing first segmentation processing on the data block to obtain a first target data segment, send the first target data segment to the receiving end, and the receiving end receives the first target data segment; the sending end continues to perform second segmentation processing on the data block, performs the first deterministic processing on a second data segment obtained by the second segmentation processing to obtain a second target data segment, sends the second target data segment to the receiving end, and the receiving end receives the second target data segment; the sending end continues to perform third segmentation processing on the data block, and repeats the above steps until the receiving end receives the last target data segment of the data block.

In an exemplary embodiment, the receiving a target data segment includes: receiving a hash value of the data block to be sent and the target data segment sent by the sending end.

As an example, the receiving end may receive the hash value of the data block and any target data segment of the data block that are sent together to the receiving end, so that after completing corresponding deterministic processing on each target data segment, hash value verification of the entire data block is performed.

In an exemplary embodiment, the receiving a hash value of the data block to be sent and the target data segment sent by the sending end includes: in response to the target data segment being a first target data segment or a last target data segment of the data block to be sent, receiving the hash value of the data block to be sent and the target data segment.

As an example, the receiving end may, in response to the target data segment being the first target data segment or the last target data segment of the data block to be sent, receive the hash value of the data block to be sent and the first target data segment or the last target data segment of the data block, so as to better identify the data block.

Step 302: performing second deterministic processing on each received target data segment.

As an example, the receiving end may, after receiving the target data segment, perform second deterministic processing on the target data segment.

In an exemplary embodiment, the second deterministic processing includes at least one of the following: integrity verification or decryption.

For example, if the first deterministic processing is integrity protection, the sending end may perform integrity protection on a first data segment obtained by performing first segmentation processing on the data block to obtain a first integrity-protected data segment, and send the first integrity-protected data segment to the receiving end; the receiving end may receive the first integrity-protected data segment and perform integrity verification on the first integrity-protected data segment.

The receiving end may complete integrity verification on each integrity-protected data segment sent by the sending end in sequence.

For example, if the first deterministic processing is encryption, the sending end may encrypt a first data segment obtained by performing first segmentation processing on the data block to obtain a first encrypted data segment, and send the first encrypted data segment to the receiving end; the receiving end may receive the first encrypted data segment and decrypt the first encrypted data segment.

The receiving end may complete decryption on each encrypted data segment sent by the sending end in sequence.

As an example, the second deterministic processing may include, but is not limited to, integrity verification or decryption. For example, the second deterministic processing may be integrity verification, or may be decryption, or may be integrity verification followed by decryption, or decryption followed by integrity verification, which is not limited in the embodiments of the present disclosure.

Step 303: combining, in sequence, the target data segments on which the second deterministic processing is performed to obtain a target data block.

As an example, the receiving end may combine, in sequence, the target data segments that have undergone integrity verification and/or decryption to obtain a target data block.

In an exemplary embodiment, after the combining, in sequence, the target data segments on which the second deterministic processing is performed to obtain a target data block, the method further includes:
calculating the hash value of the target data block; and
performing deterministic verification on the target data block based on the hash value of the data block to be sent and the hash value of the target data block.

As an example, the hash value of the target data block may be calculated, and deterministic verification on the target data block may be performed based on the hash value of the data block to be sent and the hash value of the target data block.

For example, after receiving all the target data segments of the data block on which the second deterministic processing has been performed, the receiving end sequentially combines the target data segments on which the second deterministic processing is performed to obtain a target data block, and calculates the hash value of the target data block to perform hash value verification on the data block. If the verification is successful, it indicates that the deterministic verification of the data block is successful; if the verification fails, it indicates that the deterministic verification of the data block fails, and the entire data block may be discarded.

In an exemplary embodiment, after the performing second deterministic processing on each received target data segment, the method further includes: counting a number of consecutive failures of the second deterministic processing.

For example, second deterministic processing is performed on a first target data segment of the data block; if the second deterministic processing fails, the number of consecutive failures of the second deterministic processing may be recorded as 1, and second deterministic processing continues to be performed on a second target data segment of the data block; if the second deterministic processing fails, the number of consecutive failures of the second deterministic processing may be recorded as 2.

In an exemplary embodiment, the counting a number of consecutive failures of the second deterministic processing may specifically include:
determining whether the second deterministic processing on the target data segment is successful;
in response to the second deterministic processing on the target data segment failing, incrementing the number of consecutive failures of the second deterministic processing by 1; and
in response to the second deterministic processing being successful, resetting the number of consecutive failures of the second deterministic processing to zero.

For example, second deterministic processing is performed on a first target data segment of the data block; if the second deterministic processing fails, the number of consecutive failures of the second deterministic processing may be recorded as 1, and second deterministic processing continues to be performed on a second target data segment of the data block; if the second deterministic processing fails, the number of consecutive failures of the second deterministic processing may be recorded as 2; if the second deterministic processing is successful, the number of consecutive failures of the second deterministic processing may be recorded as 0, and second deterministic processing continues to be performed on a third target data segment of the data block, and so on, until the determination of the second deterministic processing is completed for all target data segments of the data block.

In an exemplary embodiment, after the counting a number of consecutive failures of the second deterministic processing, the method further includes:
determining whether the number of consecutive failures of the second deterministic processing is greater than or equal to a preset consecutive failure threshold;
in response to the number of consecutive failures of the second deterministic processing being greater than or equal to the preset consecutive failure threshold, sending, to the sending end, a request for Radio Resource Control (RRC) connection re-establishment; and
in response to the number of consecutive failures of the second deterministic processing being less than the preset consecutive failure threshold, sending, to the sending end, a request to retransmit the target data segment.

As an example, after completing the determination of the second deterministic processing for all target data segments of the data block, the number of consecutive failures of the second deterministic processing for the data block may be obtained.

As an example, it may be determined whether the number of consecutive failures of the second deterministic processing is greater than or equal to the preset consecutive failure threshold; in response to the number of consecutive failures of the second deterministic processing being greater than or equal to the preset consecutive failure threshold, a request for Radio Resource Control (RRC) connection re-establishment may be sent to the sending end, so as to re-establish a communication connection with the sending end.

As an example, in response to the number of consecutive failures of the second deterministic processing being less than the preset consecutive failure threshold, a request to retransmit the target data segment may be sent to the sending end, so that the sending end retransmits the target data segment.

In an exemplary embodiment, after the sending, to the sending end, the request for Radio Resource Control (RRC) connection re-establishment, the method further includes: discarding all the target data segments currently received; or, after reestablishing the RRC connection with the sending end, continuing to receive the target data segments that were not successfully sent by the sending end.

As an example, after sending the request for Radio Resource Control (RRC) connection re-establishment to the sending end, all received target data segments may be discarded, or after reestablishing the RRC connection with the sending end, the target data segments not successfully sent by the sending end may be continuously received.

In the embodiments of the present disclosure, the receiving end performs second deterministic processing on each received target data segment, and combines, in sequence, the target data segments on which the second deterministic processing is performed to obtain the target data block; wherein the target data segment is the data segment obtained by the sending end segmenting the data block to be sent in sequence and performing first deterministic processing on the data segment obtained after each segmentation processing. Thus, the problem in the related art that there is no deterministic guarantee strategy for large data transmission is solved, thereby ensuring both the determinism of data segment transmission and the determinism of entire data block transmission. Moreover, errors during the data segmentation process can be discovered in time and remedial measures can be provided.

In order to facilitate understanding of the embodiments of the present disclosure, several examples are provided below to further illustrate the embodiments of the present disclosure.

### Example 1

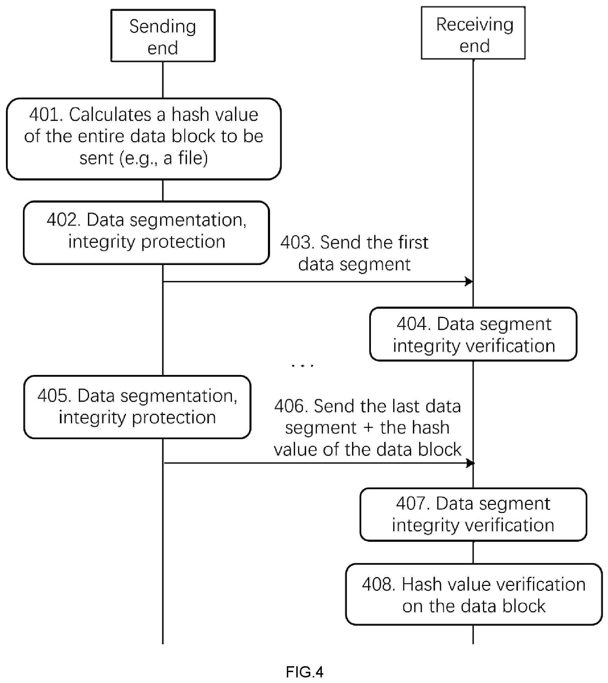

During transmission of a large data block, due to limited transmission resources (e.g., air interface resources), segmented transmission is generally required. The sending end performs integrity protection on each data segment (e.g., using a MAC-I mechanism, etc.), and the receiving end performs integrity verification on each data segment and takes corresponding processing according to the verification result. After the entire large data block is completely transmitted, the receiving end performs integrity verification on the entire data. The integrity verification may use mechanisms such as Message-Digest Algorithm 5 (MD5), Secure Hash Algorithm 1 (SHA1), Secure Hash Algorithm 256 (SHA256), etc. FIG. 4 is a schematic flowchart of data integrity protection according to an embodiment of the present disclosure. As shown in FIG. 4, the specific steps are as follows:
Step 401: the sending end calculates a hash value of the entire data block to be sent (e.g., a file).

Exemplarily, the hash value of the data block may be calculated using algorithms such as MD5/SHA1/SHA256.

Step 402: the sending end segments the data block according to a segmentation mechanism, performs integrity protection on each data segment respectively, and generates an integrity verification tag corresponding to each data segment;

Exemplarily, integrity protection may be performed on each data segment respectively using a mechanism such as a MAC-I mechanism.

Step 403: the sending end sends the first data segment of the data block and the integrity verification tag of the segment together to the receiving end;
Exemplarily, integrity verification may be performed on each data segment respectively using a mechanism such as the MAC-I mechanism.
Step 404: after receiving the data segment, the receiving end performs data segment integrity verification;
Step 405: the sending end continues to perform data segmentation and integrity protection processing;
Step 406: the sending end sends the last data segment of the data block and the integrity verification tag of the segment, together with the hash value of the data block, to the receiving end;
Step 407: after receiving the data segments, the receiving end performs data segment integrity verification in sequence;
Step 408: after receiving all segments of the data block, the receiving end starts to perform hash value verification on the data block. If the verification is successful, it indicates that the integrity verification of the data block is successful; if the verification fails, it indicates that the integrity verification of the data block fails, and the entire data block may be discarded.

Exemplarily, the hash value of the data block may also be sent together with the first data segment.

### Example 2

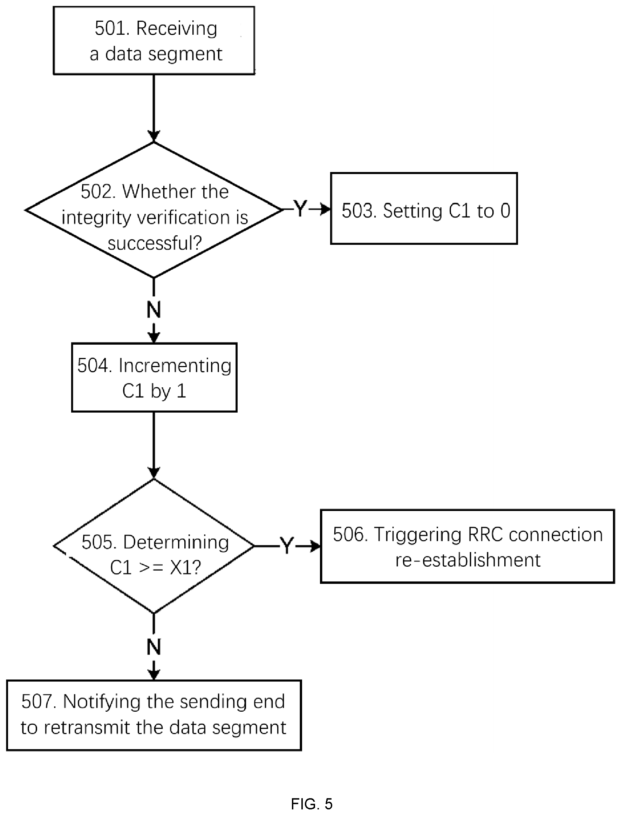

FIG. 5 is a schematic flowchart of data integrity verification at a receiving end according to an embodiment of the present disclosure, wherein the "number of consecutive failures of integrity verification" may be denoted as C1, and the "maximum consecutive failures of integrity verification threshold" may be denoted as X1, and X1 may be predefined or preconfigured. As shown in FIG. 5, the specific steps are as follows:
Step 501: the receiving end receives a data segment;
Step 502: performing data segment integrity verification, and determining whether the verification is successful;
Step 503: if the integrity verification is successful, setting C1 to 0;
Step 504: if the integrity verification fails, incrementing C1 by 1;
Step 505: determining whether C1 is greater than or equal to X1;
Step 506: if C1 is greater than or equal to X1, triggering RRC connection re-establishment, and discarding all received segments of the data block;
Step 507: if C1 is less than X1, notifying the sending end to retransmit the data segment.

As an example, for step 506, after triggering RRC connection re-establishment, all received segments of the data block may not be discarded, and after the RRC connection re-establishment succeeds, transmission of other segments of the data block that were not successfully sent continues.

As an example, the process may also be applicable to a complete data packet.

### Example 3

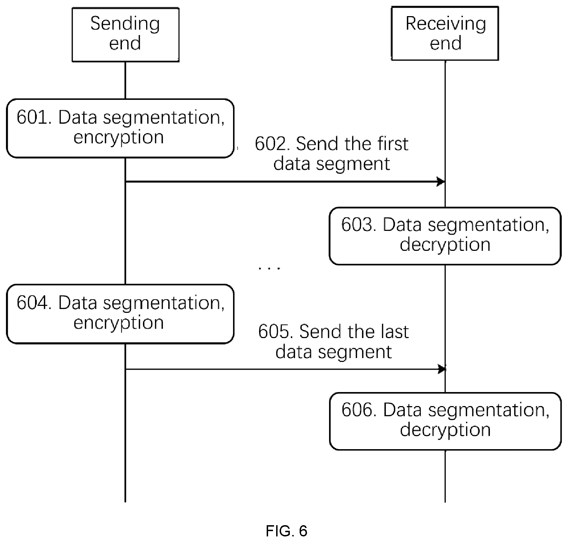

During transmission of a large data block, segmentation is usually required. If only the entire large data block is encrypted, then during transmission, when a decryption error occurs in a certain data segment, it cannot be discovered in time. The present example provides a data block encryption mechanism, which can ensure timely discovery of decryption errors so as to take necessary remedial measures. FIG. 6 is a schematic flowchart of data encryption according to an embodiment of the present disclosure. As shown in FIG. 6, the specific steps are as follows:
Step 601: the sending end segments the data block according to a segmentation mechanism, and encrypts each segmented data segment respectively;
Step 602: the sending end sends the first data segment of the data block to the receiving end;
Step 603: after receiving the data segment, the receiving end decrypts the data segment;
Step 604: the sending end continues to perform data segmentation and encryption processing;
Step 605: the sending end sends the last data segment of the data block to the receiving end;
Step 606: after receiving the data segment, the receiving end decrypts the data segment.

As an example, if the data segment has an integrity protection process, integrity protection of the data segment may be performed first, followed by encryption of the data segment.

### Example 4

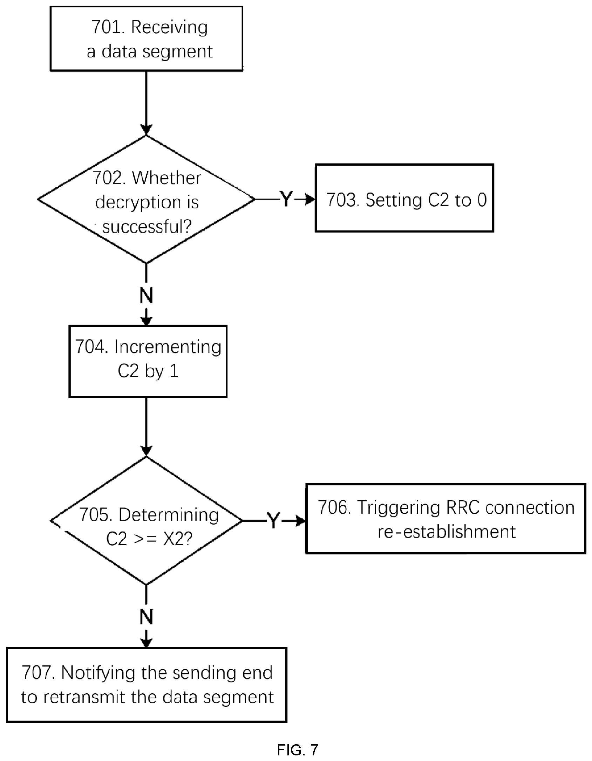

FIG. 7 is a schematic flowchart of data decryption at a receiving end according to an embodiment of the present disclosure, wherein the "number of consecutive failures of decryption" is denoted as C2, and the "maximum consecutive failures of decryption failure threshold" is denoted as X2, and the threshold X2 may be predefined or preconfigured. As shown in FIG. 7, the specific steps are as follows:
Step 701: the receiving end receives a data segment;
Step 702: performing data segment decryption, and determining whether the decryption is successful;
Step 703: if the decryption is successful, setting C2 to 0;
Step 704: if the decryption fails, incrementing C2 by 1;
Step 705: determining whether C2 is greater than or equal to X2;
Step 706: if C2 is greater than or equal to X2, triggering RRC connection re-establishment, and discarding all received segments of the data block;
Step 707: if C2 is less than X2, notifying the sending end to retransmit the data segment.

As an example, for step 706, after triggering RRC connection re-establishment, all received segments of the data block may not be discarded, and after the RRC connection re-establishment succeeds, transmission of other segments of the data block that were not successfully sent continues.

As an example, the process may also be applicable to a complete data packet.

Through the description of the above implementations, those skilled in the art can clearly understand that the method according to the above embodiments can be implemented by means of software plus a necessary universal hardware platform, and certainly can also be implemented by hardware, but in many cases the former is a better implementation. Based on such understanding, the technical solution of the present disclosure, essentially or the part contributing to the prior art, may be embodied in the form of a software product. The computer software product is stored in a storage medium (such as a ROM/RAM, magnetic disk, optical disk), and includes several instructions for causing a terminal device (which may be a mobile phone, a computer, a server, or a network device, etc.) to execute the method described in the various embodiments of the present disclosure.

In the present embodiment, a data transmission device is further provided. The device is configured to implement the above embodiments and exemplary implementations, and those already described will not be repeated. As used in the following, the term "module" may be a combination of software and/or hardware that implements a predetermined function. Although the device described in the following embodiments is preferably implemented by software, implementations by hardware, or by a combination of software and hardware, are also possible and contemplated.

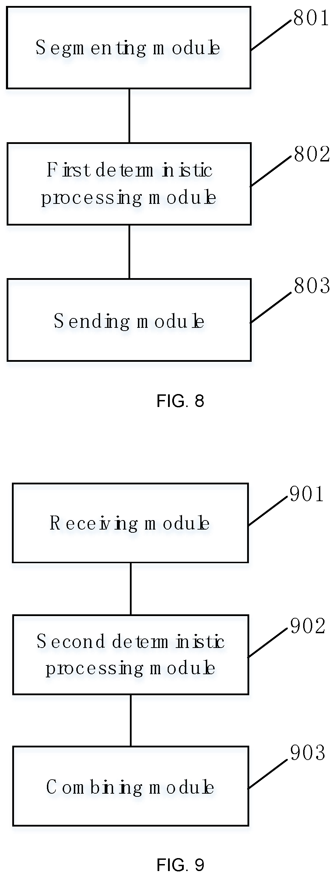

FIG. 8 is a structural block diagram of a data transmission device according to an embodiment of the present disclosure. As shown in FIG. 8, applied to a sending end, the device includes:
a segmenting module 801, configured to segment a data block to be sent in sequence;
a first deterministic processing module 802, configured to perform first deterministic processing on a data segment obtained after each segmentation processing to obtain a target data segment; and
a sending module 803, configured to send the target data segment to a receiving end.

In an exemplary embodiment, the first deterministic processing includes at least one of the following: integrity protection or encryption.

In an exemplary embodiment, the sending module 803 includes:
a first obtaining sub-module, configured to obtain a hash value of the data block to be sent; and
a sending sub-module, configured to send the hash value of the data block to be sent and the target data segment to the receiving end.

In an exemplary embodiment, the sending sub-module includes:
a sending unit, configured to, in response to the target data segment being a first target data segment or a last target data segment of the data block to be sent, send the hash value of the data block to be sent and the target data segment to the receiving end.

FIG. 9 is a structural block diagram of a data transmission device according to another embodiment of the present disclosure, applied to a receiving end. As shown in FIG. 9, the device includes:
a receiving module 901, configured to receive a target data segment; wherein the target data segment is a data segment obtained by a sending end segmenting a data block to be sent in sequence and performing first deterministic processing on a data segment obtained after each segmentation processing;
a second deterministic processing module 902, configured to perform second deterministic processing on each received target data segment; and
a combining module 903, configured to combine, in sequence, the target data segments on which deterministic verification is performed to obtain a target data block.

In an exemplary embodiment, the receiving module 901 includes:
a first receiving sub-module, configured to receive a hash value of the data block to be sent and the target data segment sent by the sending end.

In an exemplary embodiment, the first receiving sub-module includes:
a receiving unit, configured to, in response to the target data segment being a first target data segment or a last target data segment of the data block to be sent, receive the hash value of the data block to be sent and the target data segment.

In an exemplary embodiment, the device further includes:
a calculation module, configured to, after combining, in sequence, the target data segments on which the second deterministic processing is performed to obtain a target data block, calculate the hash value of the target data block; and
a verification module, configured to perform deterministic verification on the target data block based on the hash value of the data block to be sent and the hash value of the target data block.

In an exemplary embodiment, the device further includes:
a counting module, configured to count a number of consecutive failures of the second deterministic processing.

In an exemplary embodiment, the counting module includes:
a first determination sub-module, configured to determine whether the second deterministic processing on the target data segment is successful;
a counting sub-module, configured to, in response to the second deterministic processing on the target data segment failing, increment the number of consecutive failures of the second deterministic processing by 1; and
a resetting sub-module, configured to, in response to the second deterministic processing being successful, reset the number of consecutive failures of the second deterministic processing to zero.

In an exemplary embodiment, the device further includes:
a first determination sub-module, configured to, after counting the number of consecutive failures of the second deterministic processing, determine whether the number of consecutive failures of the second deterministic processing is greater than or equal to a preset consecutive failure threshold;
a first requesting sub-module, configured to, in response to the number of consecutive failures of the second deterministic processing being greater than or equal to the preset consecutive failure threshold, send, to the sending end, a request for Radio Resource Control (RRC) connection re-establishment; and
a second requesting sub-module, configured to, in response to the number of consecutive failures of the second deterministic processing being less than the preset consecutive failure threshold, send, to the sending end, a request to retransmit the target data segment.

In an exemplary embodiment, the device further includes:
a discarding sub-module, configured to, after sending, to the sending end, the request for Radio Resource Control (RRC) connection re-establishment, discard all the target data segments currently received; or,
a second receiving sub-module, configured to, after reestablishing the RRC connection with the sending end, continue to receive the target data segments that were not successfully sent by the sending end.

In an exemplary embodiment, the second deterministic processing includes at least one of the following: integrity verification or decryption.

It should be noted that each of the above modules may be implemented by software or hardware. For the latter, implementation may be achieved by the following means, but is not limited thereto: all of the above modules are located in the same processor; or, the above modules are respectively located in different processors in any combination.

Embodiments of the present disclosure further provide a computer-readable storage medium. The computer-readable storage medium stores a computer program, wherein the computer program is configured to, when being run, implement steps in any one of the above method embodiments.

In an exemplary embodiment, the above computer-readable storage medium may include, but is not limited to, any medium that can store a computer program, such as a USB flash drive, a Read-Only Memory (ROM), a Random Access Memory (RAM), a removable hard disk, a magnetic disk, or an optical disk.

Embodiments of the present disclosure further provide an electronic device, including a memory and a processor. The memory stores a computer program, and the processor is configured to run the computer program to execute steps in any one of the above method embodiments.

In an exemplary embodiment, the above electronic device may further include a transmission device and an input/output device, wherein the transmission device is connected to the processor, and the input/output device is connected to the processor.

For specific examples in this embodiment, reference may be made to the examples described in the above embodiments and exemplary implementations, and details are not repeatedly described in this embodiment.

Obviously, those skilled in the art should understand that each module or each step of the present disclosure as described above may be implemented by a universal computing device, they may be centralized on a single computing device or distributed on a network composed of a plurality of computing devices, they may be implemented by program codes executable by a computing device, and thus may be stored in a storage device and executed by the computing device. In some cases, the steps shown or described may be executed in an order different from that described here, or they may be respectively fabricated into individual integrated circuit modules, or a plurality of modules or steps thereof may be fabricated into a single integrated circuit module for implementation. As such, the present disclosure is not limited to any specific combination of hardware and software.

The above descriptions are merely exemplary embodiments of the present disclosure and are not intended to limit the present disclosure. For those skilled in the art, the present disclosure may have various modifications and changes. Any modifications, equivalent replacements, improvements, etc., made within the principle of the present disclosure shall be included within the scope of protection of the present disclosure.

## Claims

1. A data transmission method, applied to a sending end, comprising:
segmenting a data block to be sent in sequence;
performing first deterministic processing on a data segment obtained after each segmentation processing to obtain a target data segment; and
sending the target data segment to a receiving end.

2. The method according to claim 1, wherein the first deterministic processing comprises at least one of the following: integrity protection or encryption.

3. The method according to claim 1, wherein the sending the target data segment to a receiving end comprises:
obtaining a hash value of the data block to be sent; and
sending the hash value of the data block to be sent and the target data segment to the receiving end.

4. The method according to claim 3, wherein the sending the hash value of the data block to be sent and the target data segment to the receiving end comprises:
in response to the target data segment being a first target data segment or a last target data segment of the data block to be sent, sending the hash value of the data block to be sent and the target data segment to the receiving end.

5. A data transmission method, applied to a receiving end, comprising:
receiving a target data segment; wherein the target data segment is a data segment obtained by a sending end segmenting a data block to be sent in sequence and performing first deterministic processing on a data segment obtained after each segmentation processing;
performing second deterministic processing on each received target data segment; and
combining, in sequence, the target data segments on which the second deterministic processing is performed to obtain a target data block.

6. The method according to claim 5, wherein the receiving a target data segment comprises:
receiving a hash value of the data block to be sent and the target data segment sent by the sending end.

7. The method according to claim 6, wherein the receiving a hash value of the data block to be sent and the target data segment sent by the sending end comprises:
in response to the target data segment being a first target data segment or a last target data segment of the data block to be sent, receiving the hash value of the data block to be sent and the target data segment.

8. The method according to claim 6, wherein after the combining, in sequence, the target data segments on which the second deterministic processing is performed to obtain a target data block, the method further comprises:
calculating the hash value of the target data block; and
performing deterministic verification on the target data block based on the hash value of the data block to be sent and the hash value of the target data block.

9. The method according to claim 5, wherein after the performing second deterministic processing on each received target data segment, the method further comprises:
counting a number of consecutive failures of the second deterministic processing.

10. The method according to claim 9, wherein the counting a number of consecutive failures of the second deterministic processing comprises:
determining whether the second deterministic processing on the target data segment is successful;
in response to the second deterministic processing on the target data segment failing, incrementing the number of consecutive failures of the second deterministic processing by 1; and
in response to the second deterministic processing being successful, resetting the number of consecutive failures of the second deterministic processing to zero.

11. The method according to claim 10, wherein after the counting a number of consecutive failures of the second deterministic processing, the method further comprises:
determining whether the number of consecutive failures of the second deterministic processing is greater than or equal to a preset consecutive failure threshold;
in response to the number of consecutive failures of the second deterministic processing being greater than or equal to the preset consecutive failure threshold, sending, to the sending end, a request for Radio Resource Control (RRC) connection re-establishment; and
in response to the number of consecutive failures of the second deterministic processing being less than the preset consecutive failure threshold, sending, to the sending end, a request to retransmit the target data segment.

12. The method according to claim 11, wherein after the sending, to the sending end, a request for RRC connection re-establishment, the method further comprises:
discarding all the target data segments currently received; or
after reestablishing the RRC connection with the sending end, continuing to receive the target data segments that were not successfully sent by the sending end.

13. The method according to claim 5, wherein the second deterministic processing comprises at least one of the following: integrity verification or decryption.

14. A data transmission device, applied to a sending end, comprising:
a segmenting module, configured to segment a data block to be sent in sequence;
a first deterministic processing module, configured to perform first deterministic processing on a data segment obtained after each segmentation processing to obtain a target data segment; and
a sending module, configured to send the target data segment to a receiving end.

15. A data transmission device, applied to a receiving end, comprising:
a receiving module, configured to receive a target data segment; wherein the target data segment is a data segment obtained by a sending end segmenting a data block to be sent in sequence and performing first deterministic processing on a data segment obtained after each segmentation processing;
a second deterministic processing module, configured to perform second deterministic processing on each received target data segment; and
a combining module, configured to combine, in sequence, the target data segments on which deterministic verification is performed to obtain a target data block.

16. A computer-readable storage medium, having a computer program stored therein, wherein the computer program is configured to, when being executed by a processor, implement steps of the method according to any one of claims 1 to 4, or implement steps of the method according to any one of claims 5 to 13.

17. An electronic device, comprising a memory, a processor, and a computer program that is stored in the memory and executable by the processor, wherein the processor is configured to, when executing the computer program, implement steps of the method according to any one of claims 1 to 4, or implement steps of the method according to any one of claims 5 to 13.
